# EUROPEAN PATENT SPECIFICATION

(11) **EP 4 023 117 B1**
(45) Date of publication and mention of the grant of the patent: **07.01.2026**
(21) Application number: 20859261.8
(22) Date of filing: 18.05.2020
(51) Int. Cl.: A47J 31/00, A47J 31/44, A47J 31/46, B01F 23/2361, A23L 2/54

(54) **SODA MAKER HAVING CONVENIENT GAS INTAKE AND DISCHARGE**
SODABEREITER MIT BEQUEMEM GASEINLASS UND -AUSLASS
APPAREIL DE FABRICATION DE SODA À ADMISSION ET ÉVACUATION DE GAZ PRATIQUES

(30) Priority: 30.08.2019 CN 201921441761 U
(43) Date of publication of application: 06.07.2022
(73) Proprietor: Guan, Jinye, Guangdong 529300 (CN)
(72) Inventor: Guan, Jinye, Guangdong 529300 (CN)
(74) Representative: Longoni, Alessandra
(86) International application number: PCT/CN2020/090845
(87) International publication number: WO 2021/036358

(56) References cited:
- CN-U- 203 801 663
- CN-U- 205 267 847
- CN-U- 205 514 109
- CN-U- 205 514 109
- US-A- 4 548 828
- ANNON: "SodaStream PowerTM Gebrauchsanleitung", 29 June 2016 (2016-06-29), XP093067375, Retrieved from the Internet <URL:https://gzhls.at/blob/ldb/b/5/7/3/27f421f8f5ceec2bf6a5cd1a1bf6ee2c4f8b.pdf> [retrieved on 20230725]

## Description

### TECHNICAL FIELD

The present Patent relates to a soda maker.

### BACKGROUND

At present, in the prior art, a soda maker comprises a main unit and an auxiliary unit. The main unit comprises a housing, a base, a carbon dioxide cylinder provided within the housing, and a gas intake main body provided at the top of the carbon dioxide cylinder. The auxiliary unit comprises an outer casing, an auxiliary unit main body, a water bottle coupler, a tapered ring, and a soda bottle. The auxiliary unit main body is provided with a gas discharge valve. The outer casing is connected with the housing. The gas intake main body is connected with the gas intake assembly on the auxiliary unit main body, and a gas rod connected with the gas intake assembly extends into the soda bottle. When discharging gas, the gas discharge valve is operated, and then the soda bottle is removed. The existing problem is that when the soda bottle is removed, the gas discharge step needs to be operated first, and the operation is inconvenient. Further prior art is disclosed in documents CN 205 514 109 U, US 4 548 828 A and Annon, "SodaStream PowerTM Gebrauchsanleitung", (20160629), URL: https://gzhis.at/blob/ldb/b/5/7/3/27f421f8f5ceec2bf6a5cd1a1bf6ee2c4f8b.pdf.

### SUMMARY

The present Patent aims to provide a soda maker having convenient gas intake and discharge, which has the characteristics of convenient gas intake and discharge.

The present Patent is realized as follows: a soda maker having convenient gas intake and discharge, which comprises a main unit and an auxiliary unit, wherein the main unit comprises a housing, a base, a carbon dioxide cylinder provided within the housing, a gas intake main body provided at the top of the carbon dioxide cylinder, a gas intake support, a gas intake connecting rod, and a locking engagement member, the gas intake connecting rod is pivoted with the gas intake main body, the locking engagement member is pivoted with the gas intake support, the locking engagement member is engaged with the gas intake connecting rod; the auxiliary unit comprises an outer casing, an auxiliary unit main body, a water bottle coupler, a tapered ring, and a soda bottle, the auxiliary unit main body is provided with a gas discharge valve and a switch valve, the outer casing is connected with the housing, the gas intake main body is communicated with a gas intake assembly on the auxiliary unit main body, and a gas rod connected with the gas intake assembly extends into the soda bottle; wherein the housing is provided with an installation hole;
a connecting part is provided on the outer casing, two parallel pivoting plates are provided on the connecting part, and a half shaft and a positioning protrusion are provided on the pivoting plate;
the soda maker further comprises a pivoting base having a side opening and a top opening;
a half shaft hole, an operation positioning blind hole and a gas discharge positioning blind hole are provided on the side wall plate of the pivoting base;
the pivoting base is fixed within the housing, the pivoting plate passes through the installation hole, the half shaft is pivoted with the half shaft hole, during operation, the positioning protrusion is engaged with an operation positioning blind hole, an axis of the connecting part is parallel to a horizontal plane, the gas discharge valve is engaged with an end plate of the pivoting base, the switch valve is engaged with the locking engagement member, and the positioning protrusion is engaged with the gas discharge positioning blind hole.

According to the soda maker having convenient gas intake and discharge, the gas discharge valve comprises a gas discharge valve body, a gas discharge valve nut, a gas discharge valve rod, a gas discharge valve core and a pressure spring which are provided on the auxiliary unit main body, the closed end of the gas discharge valve body is provided with a valve core base and is connected with the cavity of the auxiliary unit main body, and the gas discharge valve body is provided with radial gas discharge holes;
the gas discharge valve rod comprises a driving rod part, a body part, a circular disc surrounding the body part and a stopper at the suspended end of the driving rod part;
the gas discharge nut comprises a cavity part, an internal thread part and a guide hole provided on the end plate;
the gas discharge valve core is provided at the end of the body part, the body part is in sliding fit with the gas discharge valve body, the circular disc is engaged with the end of the gas discharge valve body, the driving rod part extends through the pressure spring and the gas discharge nut, the circular disc is in sliding fit with the cavity part of the gas discharge nut, the pressure spring is in sliding fit with the circular disc and the end plate of the gas discharge nut, the driving rod part is in sliding fit with the guide hole; the driving rod part is embedded with a clamping groove on the end plate of the pivoting base, and the stopper is engaged with the end plate of the pivoting base;
during operation, the gas discharge valve core is embedded with the gas guide hole on the valve core base, the pressure spring is in an automatic state;
when discharging gas, the gas discharge valve core is separated from the gas guide hole on the valve core base, and the pressure spring is in a compressed state.

According to the soda maker having convenient gas intake and discharge, the operation positioning blind hole and the gas discharge positioning blind hole are communicated through an arc-shaped guide groove.

According to the soda maker having convenient gas intake and discharge, the connecting part is located in the installation hole, and there is a gap between the connecting part and the installation hole.

According to the soda maker having convenient gas intake and discharge, the switch valve comprises a switch valve body provided on the auxiliary unit main body, a switch valve core base provided in the switch valve body, a switch valve rod, a valve core, a pressure spring, a switch nut and a safety gas discharge device communicated with the switch valve body;
the switch valve rod comprises a head part and a rod part, and the switch nut comprises a cavity part, an external thread part and a valve rod hole;
the valve core is provided on the head of the switch valve rod, the valve core is engaged with the gas hole on the switch valve core base, the head is in sliding fit with the inner cavity of the switch valve body, the pressure spring is sleeved on the valve rod with one end engaged with the head of the switch valve rod and the other end engaged with the end plate of the cavity part of the switch nut, the switch valve rod extends out of the switch nut through the valve rod hole, and the switch valve rod is engaged with the locking engagement member.

According to the soda maker having convenient gas intake and discharge, the safety gas discharge device comprises a gas discharge cavity, a safety valve core base provided at the bottom of the gas discharge cavity, a pressure relief hole, a safety valve core, a valve rod, a pressure spring and a plug;
the safety valve core is provided on the head of the valve rod, the safety valve core is engaged with the safety valve core base, the plug is screwed with the internal thread part at the upper part of the gas discharge cavity, and the pressure spring is engaged with the head of the valve rod and the internal counterbore on the plug.

The present Patent relates to a soda maker having convenient gas intake and discharge. The structure of the present Patent enables the auxiliary unit to rotate by a specific angle and stop after an operation has ended, such that automatic gas discharge is achieved before a soda bottle removal step is performed, thereby providing operational convenience.

### BRIEF DESCRIPTION OF THE DRAWINGS

FIG. 1 is a perspective view of the present Patent.
FIG. 2 is a sectional view of the present Patent.
FIG. 3 is a view A-A of FIG. 2.

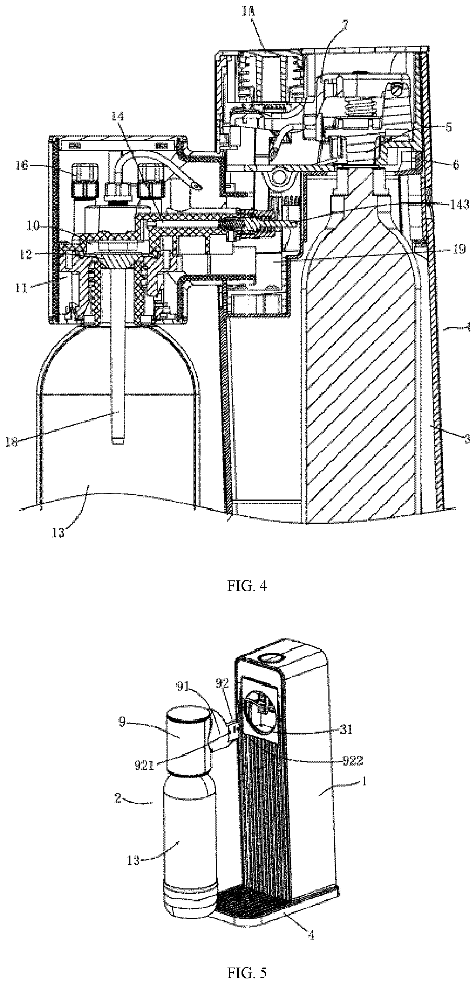

FIG. 4 is a view B-B of FIG. 2.
FIG. 5 is a first exploded perspective view of the present Patent.

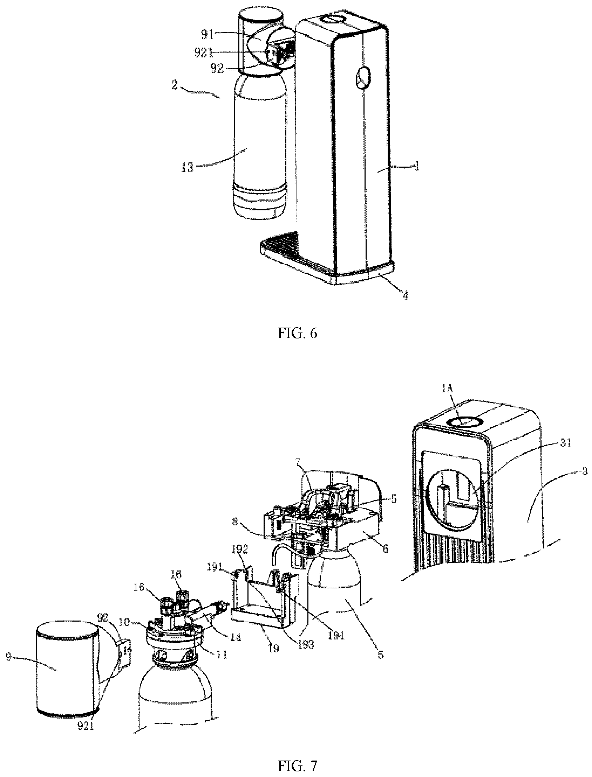

FIG. 6 is a second exploded perspective view of the present Patent.
FIG. 7 is a third exploded perspective view of the present Patent.

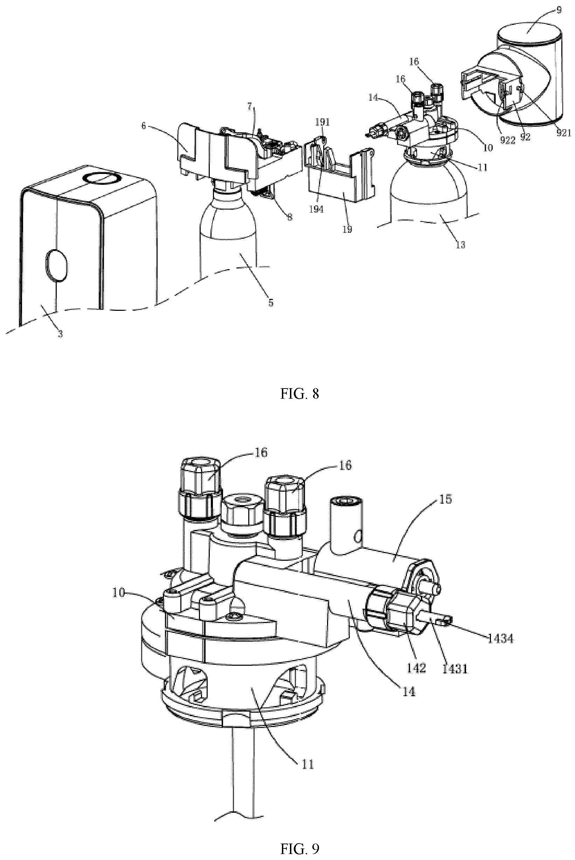

FIG. 8 is a fourth exploded perspective view of the present Patent.
FIG. 9 is a partial perspective view of an auxiliary unit according to the present Patent.
FIG. 10 is a perspective view of a support main body according to the present Patent.
FIG. 11 is a first cross-sectional view of a support main body according to the present Patent.

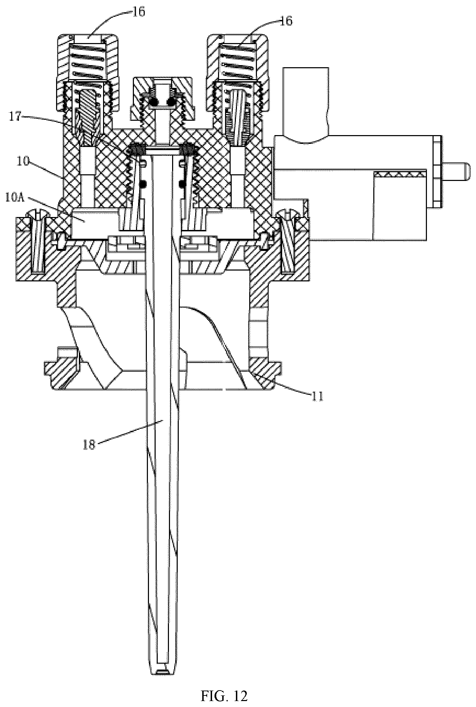

FIG. 12 is a second cross-sectional view of a support main body according to the present Patent.

### DETAILED DESCRIPTION OF THE EMBODIMENTS

The present Patent will be further described with reference to the attached drawings.

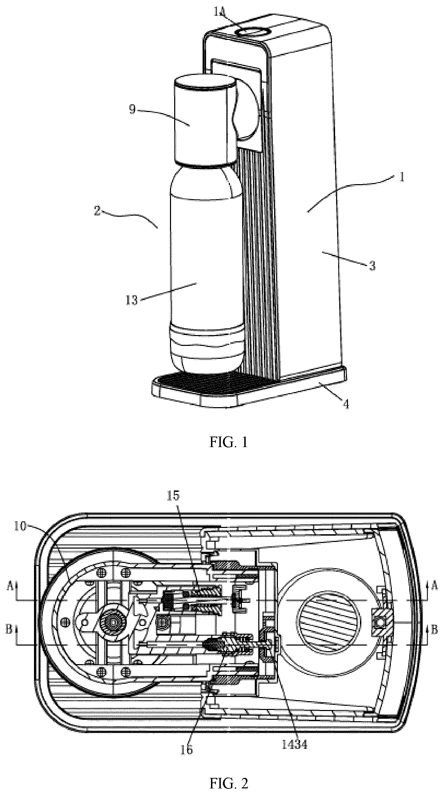

As shown in FIG. 1, FIG. 2 and FIG. 3, a soda maker having convenient gas intake and discharge comprises a main unit 1 and an auxiliary unit 2. The main unit 1 comprises a housing 3, a base 4, a carbon dioxide cylinder provided within the housing, a gas intake main body 5 provided at the top of the carbon dioxide cylinder, a gas intake support 6, a gas intake connecting rod 7, and a locking engagement member 8. The gas intake connecting rod 7 is pivoted with the gas intake main body 5. The locking engagement member 8 is pivoted with the gas intake support 6. The locking engagement member 8 is engaged with the gas intake connecting rod 7. The auxiliary unit 2 comprises an outer casing 9, an auxiliary unit main body 10, a water bottle coupler 11, a tapered ring 12, and a soda bottle 13. The tapered ring 12 is provided between the auxiliary unit main body 10 and the water bottle coupler 11. The auxiliary unit main body 10 and the water bottle coupler 11 are fixedly connected together. The auxiliary unit main body 10 is provided with a gas discharge valve 14, a switch valve 15, and a safety valve 16. The gas discharge valve 14, the switch valve 15, and the safety valve 16 are communicated with a cavity 10A on the auxiliary unit main body 10. The outer casing 9 is connected with the housing 3. The gas intake main body 5 is communicated with a gas intake assembly 17 on the auxiliary unit main body 10. A gas rod 18 connected with the gas intake assembly 17 extends into the soda bottle 13.

The housing 3 is provided with an installation hole 31.

A connecting part 91 is provided on the outer casing 9, two parallel pivoting plates 92 are provided on the connecting part, and a half shaft 921 and a positioning protrusion 922 are provided on the pivoting plate.

The soda maker further comprises a pivoting base 19 having a side opening and a top opening.

A half shaft hole 191, an operation positioning blind hole 192 and a gas discharge positioning blind hole 193 are provided on the side wall plate of the pivoting base 19.

The pivoting base 19 is fixed within the housing 3. The pivoting plate 92 passes through the installation hole 31. The half shaft 921 is pivoted with the half shaft hole 191.

During operation, the positioning protrusion 922 is engaged with an operation positioning blind hole 192. An axis of the connecting part 91 is parallel to a horizontal plane. The gas discharge valve 14 is engaged with an end plate of the pivoting base 19.

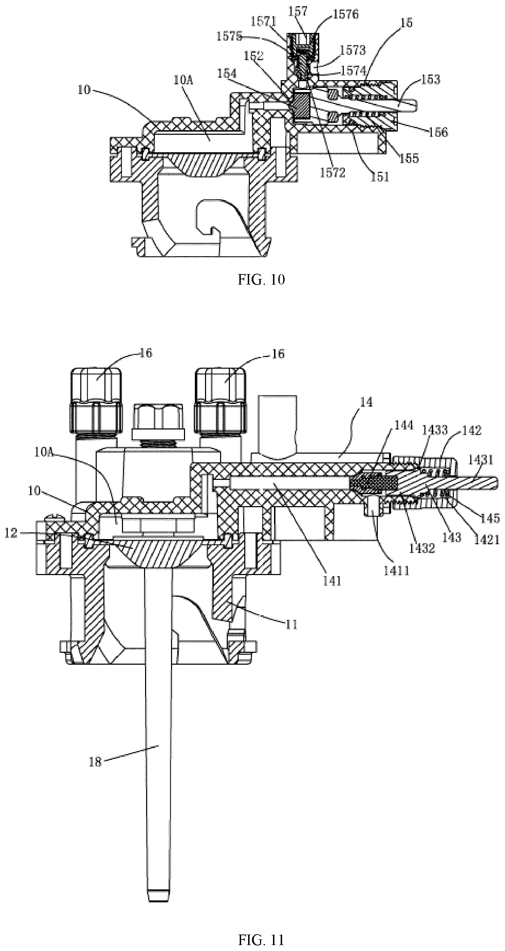

The switch valve 15 is engaged with the locking engagement member 8. The positioning protrusion 922 is engaged with the gas discharge positioning blind hole 193. As shown in FIG. 11, the gas discharge valve 14 comprises a gas discharge valve body 141, a gas discharge valve nut 142, a gas discharge valve rod 143, a gas discharge valve core 144 and a pressure spring 145 which are provided on the auxiliary unit main body. The closed end of the gas discharge valve body 141 is provided with a valve core base and is connected with the cavity 10A of the auxiliary unit main body 10. The gas discharge valve body 141 is provided with radial gas discharge holes 411.

The gas discharge valve rod 143 comprises a driving rod part 1431, a body part 1432, a circular disc 1433 surrounding the body part and a stopper 1434 at the suspended end of the driving rod part.

The gas discharge nut 142 comprises a cavity part 1421, an internal thread part and a guide hole provided on the end plate.

The gas discharge valve core 144 is provided at the end of the body part 1432. The body part 1432 is in sliding fit with the gas discharge valve body 141. The circular disc 1433 is engaged with the end of the gas discharge valve body 141. The driving rod part 1431 extends through the pressure spring 145 and the gas discharge nut 142. The circular disc 1433 is in sliding fit with the cavity part 1421 of the gas discharge nut 142. The pressure spring 145 is in sliding fit with the circular disc 1433 and the end plate of the gas discharge nut 142. The driving rod part 1431 is in sliding fit with the guide hole. The driving rod part 1431 is embedded with a clamping groove 194 on the end plate of the pivoting base 19. The stopper 1434 is engaged with the end plate of the pivoting base 1434.

During operation, the gas discharge valve core 144 is embedded with the gas guide hole on the valve core base. The pressure spring 145 is in an automatic state.

When discharging gas, the gas discharge valve core 144 is separated from the gas guide hole on the valve core base, and the pressure spring 145 is in a compressed state.

The operation positioning blind hole 192 and the gas discharge positioning blind hole 193 are communicated through an arc-shaped guide groove.

The connecting part 91 is located in the installation hole 31, and there is a gap between the connecting part 91 and the installation hole 31.

The switch valve 15 comprises a switch valve body 151 provided on the auxiliary unit main body 10, a switch valve core base 152 provided in the switch valve body, a switch valve rod 153, a valve core 154, a pressure spring 155, a switch nut 156 and a safety gas discharge device 157 communicated with the switch valve body.

The switch valve rod 153 comprises a head part and a rod part, and the switch nut 156 comprises a cavity part, an external thread part and a valve rod hole.

The valve core 154 is provided on the head of the switch valve rod 153. The valve core 154 is engaged with the gas hole on the switch valve core base 152. The head of the switch valve core base 152 is in sliding fit with the inner cavity of the switch valve body 151. The pressure spring 155 is sleeved on the valve rod with one end engaged with the head of the switch valve rod 153 and the other end engaged with the end plate of the cavity part of the switch nut 156. The switch valve rod 153 extends out of the switch nut 156 through the valve rod hole. The switch valve rod 153 is engaged with the locking engagement member.

The safety gas discharge device 157 comprises a gas discharge cavity 1571, a safety valve core base 1572 provided at the bottom of the gas discharge cavity, a pressure relief hole 1573, a safety valve core 1574, a valve rod 1575, a pressure spring and a plug 1576.

The safety valve core 1574 is provided on the head of the valve rod 1575. The safety valve core 1574 is engaged with the safety valve core base 1572. The plug 1576 is screwed with the internal thread part at the upper part of the gas discharge cavity 1571. The pressure spring is engaged with the head of the valve rod 1575 and the internal counterbore on the plug 1576.

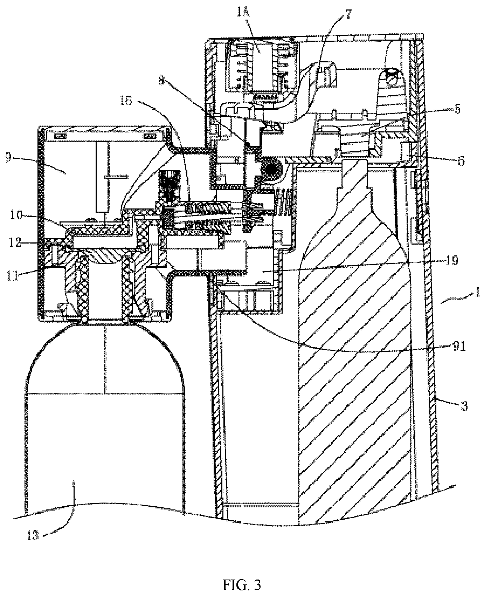

According to the present Patent, during operation, in the state shown in FIGS. 1 and 3, the button 1A on the main unit 1 is pressed down, the gas intake connecting rod 7 rotates, the gas intake connecting rod 7 is locked with the locking engagement member 8, and the switch valve rod 153 of the switch valve 15 abuts against the lower end of the locking engagement member 8. The gas in the carbon dioxide cylinder extends into the soda bottle 13 through the gas intake main body 5, the gas intake assembly 17 on the auxiliary unit main body 10 and the gas rod 18.

When the set pressure is reached in the soda bottle 13, the switch valve rod 153 of the switch valve 15 moves and acts on the lower end of the locking engagement member 8. The locking engagement member 8 is separated from the gas intake connecting rod 7. The gas intake connecting rod 7 is reset, thus cutting off the gas path.

In the state shown in FIG. 1 and FIG. 3, the auxiliary unit 2 rotates clockwise, and the gas discharge valve rod 143 is stationary relative to the main unit 1. The gas discharge valve rod 143 compresses the pressure spring 145, and the gas discharge valve core 144 leaves the valve core base and discharges gas. Then the soda bottle 13 is removed for drinking. The auxiliary unit 2 is reset, and the gas discharge valve core 144 is attached to the valve core base.

The above is only the preferred embodiment of the present Patent. It should be pointed out that several improvements and modifications can be made.

## Claims

1. A soda maker having convenient gas intake and discharge, which comprises a main unit (1) and an auxiliary unit (2), wherein the main unit comprises a housing (3), a base (4), a carbon dioxide cylinder provided within the housing, a gas intake main body (5) provided at the top of the carbon dioxide cylinder, a gas intake support (6), a gas intake connecting rod (7), and a locking engagement member (8), the gas intake connecting rod (7) is pivoted with the gas intake main body (5), the locking engagement member (8) is pivoted with the gas intake support (6), the locking engagement member (8) is engaged with the gas intake connecting rod (7); the auxiliary unit (2) comprises an outer casing (9), an auxiliary unit main body (10), a water bottle coupler (11), a tapered ring (12), and a soda bottle (13), the auxiliary unit main body (10) is provided with a gas discharge valve (14) and a switch valve (15), the outer casing (9) is connected with the housing (3), the gas intake main body (5) is communicated with a gas intake assembly (17) on the auxiliary unit main body (10), and a gas rod (18) connected with the gas intake assembly (17) extends into the soda bottle (13); wherein the housing is provided with an installation hole (31);
a connecting part (91) is provided on the outer casing (9), two parallel pivoting plates (92) are provided on the connecting part, and a half shaft (921) and a positioning protrusion (922) are provided on the pivoting plate;
the soda maker further comprises a pivoting base (19) having a side opening and a top opening;
a half shaft hole (191), an operation positioning blind hole (192) and a gas discharge positioning blind hole (193) are provided on the side wall plate of the pivoting base (19);
the pivoting base (19) is fixed within the housing (3), the pivoting plate (92) passes through the installation hole (31), the half shaft (921) is pivoted with the half shaft hole (191), during operation, the positioning protrusion (922) is engaged with an operation positioning blind hole (192), an axis of the connecting part (91) is parallel to a horizontal plane, the gas discharge valve (14) is engaged with an end plate of the pivoting base (19), the switch valve (15) is engaged with the locking engagement member (8), and the positioning protrusion (922) is engaged with the gas discharge positioning blind hole (193).

2. The soda maker having convenient gas intake and discharge according to claim 1, wherein the gas discharge valve (14) comprises a gas discharge valve body (141), a gas discharge valve nut (142), a gas discharge valve rod (143), a gas discharge valve core (144) and a pressure spring (145) which are provided on the auxiliary unit main body, the closed end of the gas discharge valve body (141) is provided with a valve core base and is connected with the cavity (10A) of the auxiliary unit main body (10), and the gas discharge valve body (141) is provided with radial gas discharge holes (411);
the gas discharge valve rod (143) comprises a driving rod part (1431), a body part (1432), a circular disc (1433) surrounding the body part and a stopper (1434) at the suspended end of the driving rod part;
the gas discharge nut (142) comprises a cavity part (1421), an internal thread part and a guide hole provided on the end plate;
the gas discharge valve core (144) is provided at the end of the body part (1432), the body part (1432) is in sliding fit with the gas discharge valve body (141), the circular disc (1433) is engaged with the end of the gas discharge valve body (141), the driving rod part (1431) extends through the pressure spring (145) and the gas discharge nut (142), the circular disc (1433) is in sliding fit with the cavity part (1421) of the gas discharge nut (142), the pressure spring (145) is in sliding fit with the circular disc (1433) and the end plate of the gas discharge nut (142), the driving rod part (1431) is in sliding fit with the guide hole; the driving rod part (1431) is embedded with a clamping groove (194) on the end plate of the pivoting base (19), and the stopper (1434) is engaged with the end plate of the pivoting base (19);
during operation, the gas discharge valve core (144) is embedded with the gas guide hole on the valve core base, the pressure spring (145) is in an automatic state;
when discharging gas, the gas discharge valve core (144) is separated from the gas guide hole on the valve core base, and the pressure spring (145) is in a compressed state.

3. The soda maker having convenient gas intake and discharge according to claim 1, wherein the operation positioning blind hole (192) and the gas discharge positioning blind hole (193) are communicated through an arc-shaped guide groove.

4. The soda maker having convenient gas intake and discharge according to claim 1, wherein the connecting part (91) is located in the installation hole (31), and there is a gap between the connecting part (91) and the installation hole (31).

5. The soda maker having convenient gas intake and discharge according to claim 1, wherein the switch valve (15) comprises a switch valve body (151) provided on the auxiliary unit main body (10), a switch valve core base (152) provided in the switch valve body, a switch valve rod (153), a valve core (154), a pressure spring (155), a switch nut (156) and a safety gas discharge device (157) communicated with the switch valve body;
the switch valve rod (153) comprises a head part and a rod part, and the switch nut (156) comprises a cavity part, an external thread part and a valve rod hole;
the valve core (154) is provided on the head of the switch valve rod (153), the valve core (154) is engaged with the gas hole on the switch valve core base (152), the head is in sliding fit with the inner cavity of the switch valve body (151), the pressure spring (155) is sleeved on the valve rod with one end engaged with the head of the switch valve rod (153) and the other end engaged with the end plate of the cavity part of the switch nut (156), the switch valve rod (153) extends out of the switch nut (156) through the valve rod hole, and the switch valve rod (153) is engaged with the locking engagement member.

6. The soda maker having convenient gas intake and discharge according to claim 5, wherein the safety gas discharge device (157) comprises a gas discharge cavity (1571), a safety valve core base (1572) provided at the bottom of the gas discharge cavity, a pressure relief hole (1573), a safety valve core (1574), a valve rod (1575), a pressure spring and a plug (1576);
the safety valve core (1574) is provided on the head of the valve rod (1575), the safety valve core (1574) is engaged with the safety valve core base (1572), the plug (1576) is screwed with the internal thread part at the upper part of the gas discharge cavity (1571), and the pressure spring is engaged with the head of the valve rod (1575) and the internal counterbore on the plug (1576).

## Patentansprüche

1. Sodabereiter mit bequemem Gaseinlass und -auslass, der eine Haupteinheit (1) und eine Hilfseinheit (2) umfasst, wobei die Haupteinheit ein Gehäuse (3), eine Basis (4), einen Kohlendioxidzylinder, der innerhalb des Gehäuses bereitgestellt ist, einen Gaseinlasshauptkörper (5), der an der Oberseite des Kohlendioxidzylinders bereitgestellt ist, eine Gaseinlassstütze (6), eine Gaseinlassverbindungsstange (7) und ein Verriegelungseingriffselement (8) umfasst, wobei die Gaseinlassverbindungsstange (7) mit dem Gaseinlasshauptkörper (5) geschwenkt wird, das Verriegelungseingriffselement (8) mit der Gaseinlassstütze (6) geschwenkt wird, das Verriegelungseingriffselement (8) mit der Gaseinlassverbindungsstange (7) eingegriffen ist; die Hilfseinheit (2) ein Außengehäuse (9), einen Hilfseinheithauptkörper (10), einen Wasserflaschenkoppler (11), einen verjüngten Ring (12) und eine Sodaflasche (13) umfasst, der Hilfseinheithauptkörper (10) mit einem Gasauslassventil (14) und einem Schaltventil (15) bereitgestellt ist, das Außengehäuse (9) mit dem Gehäuse (3) verbunden ist, der Gaseinlasshauptkörper (5) mit einer Gaseinlassbaugruppe (17) an dem Hilfseinheitshauptkörper (10) kommuniziert und sich eine Gasstange (18), die mit der Gaseinlassbaugruppe (17) verbunden ist, in die Sodaflasche (13) erstreckt; wobei das Gehäuse mit einem Installationsloch (31) bereitgestellt ist;
ein Verbindungsteil (91) an dem Außengehäuse (9) bereitgestellt ist, zwei parallele Schwenkplatten (92) an dem Verbindungsteil bereitgestellt sind, und eine Halbwelle (921) und ein Positionierungsvorsprung (922) an der Schwenkplatte bereitgestellt sind;
der Sodabereiter ferner eine Schwenkbasis (19) umfasst, die eine Seitenöffnung und eine obere Öffnung aufweist;
ein Halbwellenloch (191), ein Betriebspositionierungssackloch (192) und ein Gasauslasspositionierungssackloch (193) an der Seitenwandplatte der Schwenkbasis (19) bereitgestellt sind;
die Schwenkbasis (19) innerhalb des Gehäuses (3) befestigt ist, die Schwenkplatte (92) durch das Installationsloch (31) verläuft, die Halbwelle (921) mit dem Halbwellenloch (191) geschwenkt wird, während Betrieb der Positionierungsvorsprung (922) mit einem Betriebspositionierungssackloch (192) eingegriffen ist, eine Achse des Verbindungsteils (91) parallel zu einer horizontalen Ebene ist, das Gasauslassventil (14) mit einer Endplatte der Schwenkbasis (19) eingegriffen ist, das Schaltventil (15) mit dem Verriegelungseingriffselement (8) eingegriffen ist und der Positionierungsvorsprung (922) mit dem Gasauslasspositionierungssackloch (193) eingegriffen ist.

2. Sodabereiter mit bequemem Gaseinlass und -auslass nach Anspruch 1, wobei das Gasauslassventil (14) einen Gasauslassventilkörper (141), eine Gasauslassventilmutter (142), eine Gasauslassventilstange (143), einen Gasauslassventilkern (144) und eine Druckfeder (145) umfasst, die an dem Hilfseinheithauptkörper bereitgestellt sind, das geschlossene Ende des Gasauslassventilkörpers (141) mit einer Ventilkernbasis bereitgestellt ist und mit dem Hohlraum (10A) des Hilfseinheithauptkörpers (10) verbunden ist und der Gasauslassventilkörper (141) mit radialen Gasauslasslöchern (411) bereitgestellt ist;
die Gasauslassventilstange (143) einen Antriebsstangenteil (1431), einen Körperteil (1432), eine kreisförmige Scheibe (1433), die den Körperteil umgibt, und einen Anschlag (1434) an dem aufgehängten Ende des Treibstangenteils umfasst;
die Gasauslassmutter (142) einen Hohlraumteil (1421), einen Innengewindeteil und ein Führungsloch umfasst, das an der Endplatte bereitgestellt ist;
der Gasauslassventilkern (144) an dem Ende des Körperteils (1432) bereitgestellt ist, der Körperteil (1432) in Gleitsitz mit dem Gasauslassventilkörper (141) ist, die kreisförmige Scheibe (1433) mit dem Ende des Gasauslassventilkörpers (141) eingegriffen ist, sich der Antriebsstangenteil (1431) durch die Druckfeder (145) und die Gasauslassmutter (142) erstreckt, die kreisförmige Scheibe (1433) in Gleitsitz mit dem Hohlraumteil (1421) der Gasauslassmutter (142) ist, die Druckfeder (145) in Gleitsitz mit der kreisförmigen Scheibe (1433) und der Endplatte der Gasauslassmutter (142) ist, der Antriebsstangenteil (1431) in Gleitsitz mit dem Führungsloch ist; der Antriebsstangenteil (1431) mit einer Klemmnut (194) an der Endplatte der Schwenkbasis (19) eingebettet ist und der Anschlag (1434) mit der Endplatte der Schwenkbasis (19) eingegriffen ist;
während Betrieb der Gasauslassventilkern (144) mit dem Gasführungsloch an der Ventilkernbasis eingebettet ist, wobei die Druckfeder (145) in einem automatischen Zustand ist;
wenn Gas ausgelassen wird, der Gasauslassventilkern (144) von dem Gasführungsloch an der Ventilkernbasis getrennt ist und die Druckfeder (145) in einem komprimierten Zustand ist.

3. Sodabereiter mit bequemem Gaseinlass und -auslass nach Anspruch 1, wobei das Betriebspositionierungssackloch (192) und das Gasauslasspositionierungssackloch (193) durch eine bogenförmige Führungsnut kommunizieren.

4. Sodabereiter mit bequemem Gaseinlass und -auslass nach Anspruch 1, wobei sich der Verbindungsteil (91) in dem Installationsloch (31) befindet und es einen Spalt zwischen dem Verbindungsteil (91) und dem Installationsloch (31) gibt.

5. Sodabereiter mit bequemem Gaseinlass und -auslass nach Anspruch 1, wobei das Schaltventil (15) einen Schaltventilkörper (151), der an dem Hilfseinheithauptkörper (10) bereitgestellt ist, eine Schaltventilkernbasis (152), die in dem Schaltventilkörper bereitgestellt ist, eine Schaltventilstange (153), einen Ventilkern (154), eine Druckfeder (155), eine Schaltmutter (156) und eine Sicherheitsgasauslassvorrichtung (157), die mit dem Schaltventilkörper kommuniziert, umfasst;
die Schaltventilstange (153) einen Kopfteil und einen Stangenteil umfasst und die Schaltmutter (156) einen Hohlraumteil, einen Außengewindeteil und ein Ventilstangenloch umfasst;
der Ventilkern (154) an dem Kopf der Schaltventilstange (153) bereitgestellt ist, der Ventilkern (154) mit dem Gasloch an der Schaltventilkernbasis (152) eingegriffen ist, der Kopf in Gleitsitz mit dem inneren Hohlraum des Schaltventilkörpers (151) ist, die Druckfeder (155) an der Ventilstange mit einem Ende eingegriffen mit dem Kopf der Schaltventilstange (153) und dem anderen Ende eingegriffen mit der Endplatte des Hohlraumteils der Schaltmutter (156) gehülst ist, sich die Schaltventilstange (153) aus der Schaltmutter (156) durch das Ventilstangenloch erstreckt und die Schaltventilstange (153) mit dem Verriegelungseingriffselement eingegriffen ist.

6. Sodabereiter mit bequemem Gaseinlass und -auslass nach Anspruch 5, wobei die Sicherheitsgasauslassvorrichtung (157) einen Gasauslasshohlraum (1571), eine Sicherheitsventilkernbasis (1572), die an dem Boden des Gasauslasshohlraums bereitgestellt ist, ein Druckentlastungsloch (1573), einen Sicherheitsventilkern (1574), eine Ventilstange (1575), eine Druckfeder und einen Stopfen (1576) umfasst;
wobei der Sicherheitsventilkern (1574) an dem Kopf der Ventilstange (1575) bereitgestellt ist, der Sicherheitsventilkern (1574) mit der Sicherheitsventilkernbasis (1572) eingegriffen ist, der Stopfen (1576) mit dem Innengewindeteil an dem oberen Teil des Gasauslasshohlraums (1571) verschraubt ist und die Druckfeder mit dem Kopf der Ventilstange (1575) und der Innensenkung an dem Stopfen (1576) eingegriffen ist.

## Revendications

1. Appareil de fabrication de soda à admission et évacuation de gaz pratiques, qui comprend une unité principale (1) et une unité auxiliaire (2), dans lequel l'unité principale comprend un boîtier (3), une base (4), un cylindre de dioxyde de carbone prévu à l'intérieur du boîtier, un corps principal d'admission de gaz (5) prévu au sommet du cylindre de dioxyde de carbone, un support d'admission de gaz (6), une bielle d'admission de gaz (7) et un élément de mise en prise de verrouillage (8), la bielle d'admission de gaz (7) est pivotée avec le corps principal d'admission de gaz (5), l'élément de mise en prise de verrouillage (8) est pivoté avec le support d'admission de gaz (6), l'élément de mise en prise de verrouillage (8) est en prise avec la bielle d'admission de gaz (7) ; l'unité auxiliaire (2) comprend un carter externe (9), un corps principal d'unité auxiliaire (10), un coupleur de bouteille d'eau (11), une bague conique (12) et une bouteille de soda (13), le corps principal d'unité auxiliaire (10) est pourvu d'une soupape d'évacuation de gaz (14) et d'une soupape de commutation (15), le carter externe (9) est relié au boîtier (3), le corps principal d'admission de gaz (5) communique avec un ensemble d'admission de gaz (17) sur le corps principal d'unité auxiliaire (10), et une tige de gaz (18) reliée à l'ensemble d'admission de gaz (17) s'étend dans la bouteille de soda (13) ; dans lequel le boîtier est pourvu d'un trou d'installation (31) ;
une partie de connexion (91) est prévue sur le carter externe (9), deux plaques pivotantes parallèles (92) sont prévues sur la partie de connexion, et un demi-arbre (921) et une saillie de positionnement (922) sont prévus sur la plaque pivotante ;
l'appareil de fabrication de soda comprend en outre une base pivotante (19) ayant une ouverture latérale et une ouverture supérieure ;
un trou de demi-arbre (191), un trou borgne de positionnement de fonctionnement (192) et un trou borgne de positionnement d'évacuation de gaz (193) sont prévus sur la plaque de paroi latérale de la base pivotante (19) ;
la base pivotante (19) est fixée à l'intérieur du boîtier (3), la plaque pivotante (92) passe à travers le trou d'installation (31), le demi-arbre (921) pivote avec le trou de demi-arbre (191), pendant le fonctionnement, la saillie de positionnement (922) vient en prise avec un trou borgne de positionnement de fonctionnement (192), un axe de la partie de connexion (91) est parallèle à un plan horizontal, la soupape d'évacuation de gaz (14) vient en prise avec une plaque d'extrémité de la base pivotante (19), la soupape de commutation (15) vient en prise avec l'élément de mise en prise de verrouillage (8), et la saillie de positionnement (922) vient en prise avec le trou borgne de positionnement d'évacuation de gaz (193).

2. Appareil de fabrication de soda à admission et évacuation de gaz pratiques selon la revendication 1, dans lequel la soupape d'évacuation de gaz (14) comprend un corps de soupape d'évacuation de gaz (141), un écrou de soupape d'évacuation de gaz (142), une tige de soupape d'évacuation de gaz (143), un noyau de soupape d'évacuation de gaz (144) et un ressort de pression (145) qui sont prévus sur le corps principal d'unité auxiliaire, l'extrémité fermée du corps de soupape d'évacuation de gaz (141) est dotée d'une base de noyau de soupape et est connectée à la cavité (10A) du corps principal d'unité auxiliaire (10), et le corps de soupape d'évacuation de gaz (141) est doté de trous d'évacuation de gaz radiaux (411) ;
la tige de soupape d'évacuation de gaz (143) comprend une partie de tige d'entraînement (1431), une partie de corps (1432), un disque circulaire (1433) entourant la partie de corps et une butée (1434) au niveau de l'extrémité suspendue de la partie de tige d'entraînement ;
l'écrou d'évacuation de gaz (142) comprend une partie de cavité (1421), une partie de filetage interne et un trou de guidage prévu sur la plaque d'extrémité ;
le noyau de soupape d'évacuation de gaz (144) est prévu au niveau de l'extrémité de la partie de corps (1432), la partie de corps (1432) est en ajustement coulissant avec le corps de soupape d'évacuation de gaz (141), le disque circulaire (1433) est en prise avec l'extrémité du corps de soupape d'évacuation de gaz (141), la partie de tige d'entraînement (1431) s'étend via le ressort de pression (145) et l'écrou d'évacuation de gaz (142), le disque circulaire (1433) est en ajustement coulissant avec la partie de cavité (1421) de l'écrou d'évacuation de gaz (142), le ressort de pression (145) est en ajustement coulissant avec le disque circulaire (1433) et la plaque d'extrémité de l'écrou d'évacuation de gaz (142), la partie de tige d'entraînement (1431) est en ajustement coulissant avec le trou de guidage ; la partie de tige d'entraînement (1431) est encastrée avec une rainure de serrage (194) sur la plaque d'extrémité de la base pivotante (19), et la butée (1434) est en prise avec la plaque d'extrémité de la base pivotante (19) ;
pendant le fonctionnement, le noyau de soupape d'évacuation de gaz (144) est encastré avec le trou de guidage de gaz sur la base de noyau de soupape, le ressort de pression (145) est dans un état automatique ;
lors de l'évacuation de gaz, le noyau de soupape d'évacuation de gaz (144) est séparé du trou de guidage de gaz sur la base de noyau de soupape, et le ressort de pression (145) est dans un état comprimé.

3. Appareil de fabrication de soda à admission et évacuation de gaz pratiques selon la revendication 1, dans lequel le trou borgne de positionnement de fonctionnement (192) et le trou borgne de positionnement d'évacuation de gaz (193) sont en communication via une rainure de guidage en forme d'arc.

4. Appareil de fabrication de soda à admission et évacuation de gaz pratiques selon la revendication 1, dans lequel la partie de connexion (91) est située dans le trou d'installation (31), et il existe un espace entre la partie de connexion (91) et le trou d'installation (31).

5. Appareil de fabrication de soda à admission et évacuation de gaz pratiques selon la revendication 1, dans lequel la soupape de commutation (15) comprend un corps de soupape de commutation (151) prévu sur le corps principal d'unité auxiliaire (10), une base de noyau de soupape de commutation (152) prévue dans le corps de soupape de commutation, une tige de soupape de commutation (153), un noyau de soupape (154), un ressort de pression (155), un écrou de commutation (156) et un dispositif d'évacuation de gaz de sécurité (157) en communication avec le corps de soupape de commutation ;
la tige de soupape de commutation (153) comprend une partie de tête et une partie de tige, et l'écrou de commutation (156) comprend une partie de cavité, une partie de filetage externe et un trou de tige de soupape ;
le noyau de soupape (154) est prévu sur la tête de la tige de soupape de commutation (153), le noyau de soupape (154) est en prise avec le trou de gaz sur la base de noyau de soupape de commutation (152), la tête vient en ajustement coulissant avec la cavité interne du corps de soupape de commutation (151), le ressort de pression (155) vient en manchon sur la tige de soupape avec une extrémité en prise avec la tête de la tige de soupape de commutation (153) et l'autre extrémité en prise avec la plaque d'extrémité de la partie de cavité de l'écrou de commutation (156), la tige de soupape de commutation (153) s'étend hors de l'écrou de commutation (156) à travers le trou de tige de soupape, et la tige de soupape de commutation (153) est en prise avec l'élément de mise en prise de verrouillage.

6. Appareil de fabrication de soda à admission et évacuation de gaz pratiques selon la revendication 5, dans lequel le dispositif d'évacuation de gaz de sécurité (157) comprend une cavité d'évacuation de gaz (1571), une base de noyau de soupape de sécurité (1572) prévue au fond de la cavité d'évacuation de gaz, un trou de décharge de pression (1573), un noyau de soupape de sécurité (1574), une tige de soupape (1575), un ressort de pression et un bouchon (1576) ;
le noyau de soupape de sécurité (1574) est prévu sur la tête de la tige de soupape (1575), le noyau de soupape de sécurité (1574) est en prise avec la base de noyau de soupape de sécurité (1572), le bouchon (1576) est vissé avec la partie de filetage interne au niveau de la partie supérieure de la cavité d'évacuation de gaz (1571), et le ressort de pression est en prise avec la tête de la tige de soupape (1575) et le contre-alésage interne sur le bouchon (1576).
